# EUROPÄISCHE PATENTSCHRIFT

(11) **EP 3 561 284 B1**
(45) Veröffentlichungstag und Bekanntmachung des Hinweises auf die Patenterteilung: **07.04.2021**
(21) Anmeldenummer: 19170265.3
(22) Anmeldetag: 18.04.2019
(51) Int. Cl.: F02M 26/22, F02M 26/33, F02M 26/35, B60H 1/02, F01N 5/02, F02B 37/18, F02M 26/06, F02M 26/24, F02M 26/28, F02M 26/32, F02M 26/38, F01N 3/02, F28D 7/00, F28D 7/06, F28D 7/12, F28D 7/10, F28D 7/16, F02M 26/00

(54) **ABGASRÜCKFÜHRUNGSANORDNUNG MIT WÄRMETAUSCHER, WÄRMETAUSCHER UND BRENNKRAFTMASCHINE**
HEAT EXCHANGER AND EXHAUST GAS FEEDBACK ASSEMBLY WITH HEAT EXCHANGER AND COMBUSTION ENGINE
DISPOSITIF DE RECIRCULATION DE GAZ D'ÉCHAPPEMENT POURVU D'UN ÉCHANGEUR DE CHALEUR, ÉCHANGEUR DE CHALEUR ET MOTEUR À COMBUSTION INTERNE

(30) Priorität: 23.04.2018 DE 102018109688
(43) Veröffentlichungstag der Anmeldung: 30.10.2019
(73) Patentinhaber: VOLKSWAGEN AKTIENGESELLSCHAFT, 38440 Wolfsburg (DE)
(72) Erfinder: RIEKHOF, Peter, 38304 Leinde (DE); HILZENDEGER, Jürgen, 31303 Burgdorf (DE); SCHMIDT, Arnd, 38518 Gifhorn (DE); TEICHARDT, Timo, 38518 Gifhorn (DE)
(74) Vertreter: Gulde & Partner

(56) Entgegenhaltungen:
- EP-A1- 2 305 991
- EP-A2- 1 688 607
- WO-A1-2014/048923
- DE-A1-102009 032 045
- DE-T5-112011 105 087
- DE-T5-112013 007 041
- DE-T5-112016 002 075
- FR-A1- 2 901 599
- JP-A- 2001 027 158
- JP-A- 2010 156 242
- US-A1- 2009 277 428

## Beschreibung

Die vorliegende Erfindung betrifft eine Einrichtung zur Abgasrückführung zur zumindest teilweisen Rückführung von Abgasen einer Verbrennungseinrichtung in den der Verbrennungseinrichtung zuzuführenden Gasstrom, die im Strömungskanal für das rückzuführende Abgas zur Abkühlung des Abgases und zur Ableitung von Abgaswärme einen Abgasrückführungskühler aufweist.

Außerdem betrifft die vorliegende Erfindung eine Brennkraftmaschine, die eine erfindungsgemäße Einrichtung zur Abgasrückführung umfasst, sowie ein Kraftfahrzeug, welches wiederum die Brennkraftmaschine umfasst.

Zur Verringerung von Stickoxid- und Rußemissionen von Verbrennungsmotoren mit Abgasturbo-Aufladung wird das entstandene Abgas stromabwärts der Turbine des Abgasturboladers beziehungsweise stromabwärts eines gegebenenfalls angeordneten Dieselpartikelfilters entnommen und stromaufwärts des Verdichters des Abgasturboladers der Ansaugluft zugeführt. Der Volumenstrom der Abgasrückführmenge wird üblicherweise mittels eines Abgasrückführungsventils geregelt, das in der Abgasrückführungsstrecke angeordnet ist. Um den Verdichter vor zu hohen Abgastemperaturen zu schützen, ist üblicherweise in der Abgasrückführungsstrecke zusätzlich ein Abgasrückführungskühler angeordnet, der unter Abführung von Abgaswärme das dem Verdichter zugeführte Abgas abkühlt. Diese Abgaskühlung hat den zusätzlichen Effekt der weiteren Reduktion von Stickoxiden im Abgas.

Der Zweck der Abgasrückführung besteht in der Herstellung eines Gemisches aus Frischluft und Abgas, welches dem Verbrennungsprozess zugeführt wird und einen niedrigeren Sauerstoffgehalt aufweist als reine Frischluft, wodurch die Temperatur im Brennraum einer Verbrennungseinrichtung oder Brennkraftmaschine nicht mehr ein Niveau erreicht, bei dem Stickstoffoxid in der Menge gebildet wird, wie es bei reiner Frischluftzufuhr der Fall wäre.

Einige der verwendeten Abgasrückführungskühler werden dafür eingesetzt, die bei der Abkühlung gewonnene Wärme des Abgases weiterer Nutzung, wie zum Beispiel zur Erwärmung der Brennkraftmaschine oder auch eines Fahrgastraumes eines mit der Brennkraftmaschine ausgestatteten Kraftfahrzeuges oder weiterer Gegenstände, zuzuführen.

Die EP 1 455 078 A1 offenbart eine Brennkraftmaschine mit einem Abgasturbolader und einem Abgasrückführungssystem, welches kostengünstig ausgestaltet ist und einen optimierten Motorbetrieb ermöglicht. Zu diesem Zweck ist neben einem Niederdruck-Rückführungspfad ein zusätzlicher Hochdruck-Rückführungspfad zur Ableitung des Abgases vorgesehen.

Die DE 10 2004 061 809 A1 offenbart ein Heiz- und/oder Kühlsystem für ein Kraftfahrzeug, welches zwar keine Abgasrückführung aufweist, jedoch zur Erwärmung des Motors und/oder zur Beheizung des Kraftfahrzeuges einen extra Brenner einsetzt zur zusätzlichen Erwärmung des Abgases und Ableitung beziehungsweise Abnahme der Wärme des Abgases in einem Wärmetauscher. Durch den Einsatz des zusätzlichen Brenners wird jedoch das Gesamtgewicht der Brennkraftmaschine erhöht. Beim Betrieb des Brenners wird zusätzlicher Brennstoff verbraucht.

In der DE 10 2006 054 043 A1 ist eine Brennkraftmaschine mit Abgasrückführung dargestellt, die einen Hochdruck- und einen Niederdruck-Rückführungspfad aufweist, wobei im Niederdruck-Rückführungspfad ein Abgasrückführungskühler angeordnet ist. Dieses Abgasrückführungssystem umfasst somit neben dem Abgasrückführungskühler eine erste Abgasableitung zur Ableitung von nicht rückgeführtem Abgas, die an einer ersten Abzweigung stromaufwärts des Abgasrückführungskühlers angeordnet ist.

Aus der DE 10 2005 052 496 A1 ist eine Brennkraftmaschine mit einem Abgasturbolader bekannt, die im Abgasrückführungspfad einen Abgaskühler aufweist. Dabei sind die Abgasvolumenströme in ihrer Größe und Richtung durch den Abgasrückführungspfad unvariierbar vorgegeben.

Aus den FR 2 901 599 A1 und JP 2001 027158 A sind andere Beispiele bekannt.

Es besteht in den in Kraftfahrzeugen eingesetzten Brennkraftmaschinen zunehmend das Problem, dass Einrichtungen zur Abgasaufbereitung und Abgasrückführung räumlich von der Verbrennungseinheit stärker getrennt sind. Das darin geführte Abgas neigt durch den hohen Feuchtegehalt und die im Abgaskühler erniedrigte Temperatur zur Kondensation in der Abgasrückführungsleitung. Entstehendes Kondensat wiederum kann je nach Temperatur in der Abgasrückführungsleitung zu Eisbildung führen. Beides kann zu einer Verringerung des Leitungsquerschnitts führen, was insbesondere bei Niederdrucksystemen zu einem starken Druckverlust führt. Darüber hinaus führt Eis und Kondensat, welches in die nachgeschalteten Einrichtungen, insbesondere in den Turbolader gelangt, zu deren Schädigung.

DE 10 2008 015 591 A1 schlägt zur Lösung dieses Problems vor, dass die Abgasrückführung umgangen wird, wenn die Temperatur von Ansauggas zu niedrig ist. Dies löst jedoch nicht das Problem zu langer Abgasleitungen, da es dort auch bei erreichten Soll-Temperaturen zur Kondensation von Wasser an den Wänden der Leitungen kommt.

Der Erfindung liegt nun die Aufgabe zugrunde, eine Abgasrückführungsanordnung bereitzustellen, die die Nachteile des Stands der Technik behebt oder zumindest reduziert. Insbesondere soll eine Abgasrückführungsanordnung bereitgestellt werden, in der eine Kondensation von Feuchtigkeit beziehungsweise eine Eisbildung in einer Abgasrückführungsleitung wirksam verhindert wird.

Diese Aufgabe wird durch eine Abgasrückführungsanordnung, einen Wärmetauscher sowie eine Brennkraftmaschine mit den Merkmalen des unabhängigen Anspruchs 1 gelöst. Somit betrifft ein erster Aspekt der Erfindung eine Abgasrückführungsanordnung zur zumindest teilweisen Rückführung von Abgasen einer Verbrennungseinrichtung in den der Verbrennungseinrichtung zuzuführenden Gasstrom. Der Gasstrom wird in einem Strömungskanal geführt. Die Abgasrückführungsanordnung weist im Strömungskanal für das rückzuführende Abgas einen Abgasrückführungskühler zur Abkühlung des Abgases sowie zur Ableitung von Abgaswärme auf. Stromab des Abgasrückführungskühlers ist eine mit der Gasstromströmung technisch verbundene Abgasrückführungsleitung angeordnet. Diese befindet sich demnach strömungstechnisch zwischen Abgasrückführungskühler und einem Zustrom der Verbrennungseinrichtung. Erfindungsgemäß ist vorgesehen dass die Abgasrückführungsleitung einen Wärmetauscher zur Zuführung von Wärme aufweist.

In der erfindungsgemäßen Abgasrückführungsanordnung ist eine Kondensatbildung nahezu vollständig unterbunden. Darüber hinaus findet insbesondere keine Eisbildung in der Abgasrückführungsleitung statt. Dies stellt den Schutz nachgeschalteter Bauteile sicher. Darüber hinaus wird ein Querschnitt des Strömungskanals und insbesondere der Abgasrückführungsleitung nicht durch Tröpfchen- oder Eisbildung verkleinert. Dies ist insbesondere bei Niederdruck-Abgasrückführungssystemen ein entscheidender Vorteil, da hier jegliche Verringerung des Querschnitts zu einem Druckabfall führen würde, der sich nachteilig auf den Wirkungsgrad der Abgasrückführungsanordnung auswirken würde, da der relativ tolerierbare Druckverlust deutlich geringer ist als bei Vergleichssystemen.

Vorteilhafterweise wird das Wirkprinzip bestehender Wärmetauschertechnologien im Bereich der Abgastechnik umgekehrt, sodass nur wenig Umbauten erforderlich sind. In der Abgasrückführung werden bislang Wärmetauscher eingesetzt, die den Gasstrom kühlen, ihm also Wärme entziehen. Dazu sind sie auf eine höchstmögliche Wärmeübertragung zwischen dem im Wärmetauscher geführten Austauschfluid und dem in der Abgasleitung geführten Abgas ausgelegt. Hierzu ist üblicherweise die Oberfläche, an der die Übertragung stattfindet, nämlich die dem Abgas zugewandte Oberfläche der Abgasleitung, möglichst groß. Der Wärmeaustausch erfolgt dann vom Abgas über die möglichst große Oberfläche der Abgasleitung auf das Austauschfluid, welches im Zuge dessen erwärmt wird. Im erfindungsgemäßen Wärmetauscher hingegen erfolgt ein Wärmeaustausch vom Austauschfluid auf die Leitungswand.

Die erfindungsgemäße Abgasrückführungsanordnung ermöglicht eine bessere Nutzung des zur Verfügung stehenden Bauraums in einer Brennkraftmaschine. Das heißt, der Bauraum kann weitgehend unabhängig davon genutzt werden, wie der Abgasrückführungskühler und ein Zustrom zur Verbrennungseinrichtung zueinander angeordnet und insbesondere beabstandet sind. Hieraus ergibt sich ein entscheidender Vorteil zu bestehenden Technologien. Bekannte Abgasrückführungsanordnungen, insbesondere solche im Niederdruckbereich, erfordern eine möglichst kurze Abgasrückführungsleitung, um die unvermeidliche Kondensatbeziehungsweise Eisbildung in der Abgasrückführungsleitung beziehungsweise deren Folgen möglichst zu reduzieren. Dies erfordert wiederum eine räumliche Nähe der in der Abgasrückführung miteinander verbundenen Komponenten. Die erfindungsgemäße Abgasrückführungsanordnung hingegen stellt auch für längere Abgasrückführungsleitungen, mit bis zu 70 Zentimetern Länge, eine Kondensat- und Eisfreiheit sicher.

Der Wärmetauscher in der erfindungsgemäßen Abgasrückführungsanordnung weist ein Austauschfluid auf, welches thermisch mit der Abgasrückführungsleitung in Kontakt steht.

In bevorzugter Ausgestaltung der Erfindung ist vorgesehen, dass der Wärmetauscher strömungstechnisch mit einem Kühlmittelkreislauf einer Verbrennungseinrichtung und/oder einer Abgasrückführung verbunden ist. Der Wärmetauscher kann demnach als Teil eines Kühlmittelkreislaufs der Verbrennungseinrichtung und/oder der Abgasrückführung angesehen werden. Das Austauschfluid des Wärmetauschers ist in diesem Fall das Kühlmittel des betreffenden Kühlmittelkreislaufs. Der Vorteil dieser Ausgestaltung liegt im Wesentlichen darin, dass kein zusätzlicher Fluidkreislauf notwendig wird und damit kein zusätzlicher Bauraum beansprucht werden muss. Zudem entfällt eine separate Erwärmungseinrichtung, um das Austauschfluid des Wärmetauschers auf eine definierte Solltemperatur zu bringen, die geeignet ist, die Abgasrückführungsleitung gegen Kondensation im Innenumfang zu schützen. Vielmehr wird Wärmeenergie genutzt, die beim Kühlen anderer Baugruppen, insbesondere der Verbrennungseinrichtung, frei wird.

Für ein wirksames Unterbinden einer Kondensation im Innern der Abgasrückführungsleitung werden bevorzugt Einschaltbedingungen vorgesehen, die erfüllt sein müssen, um ein Passieren der Abgasrückführungsleitung zu erlauben, also ein entsprechendes Stellmittel in beziehungsweise stromauf der Abgasrückführungsleitung in Durchlassposition zu stellen. Bevorzugt wird die Einschaltbedingung als abhängig von einer Außentemperatur, einer Kühlertemperatur und/oder einer Abgastemperatur gewählt oder entspricht einem vordefinierten Wert einer solchen.

Alternativ oder zusätzlich weist die Abgasrückführungsanordnung ein insbesondere steuerbares Stellmittel auf, welches bevorzugt zwischen Abgasrückführungskühler und Abgasrückführungsleitung angeordnet und ausgebildet ist, die Abgasrückführungsleitung zu verschließen. Das Stellmittel befindet sich mit Vorteil dann in einer Verschlussposition, wenn die Solltemperatur des Austauschfluids nicht erreicht ist. Dies ist insbesondere in Startphasen und bei stark reduzierter Außentemperatur der Fall. Der Durchfluss durch die Abgasrückführungsleitung ist demnach nur bei Erreichen einer sogenannten Einschaltbedingung, die sich insbesondere im Erreichen der Solltemperatur zeigt, ermöglicht. Diese Ausgestaltung stellt sicher, dass auch bei niedrigeren Kühlmittel- beziehungsweise Austauschfluid-Temperaturen die Abgasrückführungsleitung kondensat- und eisfrei bleibt.

Im Weiteren soll unter Fluid stets auch das Austauschfluid in obiger Bedeutung verwendet werden.

In einer weiter bevorzugten Ausgestaltung der Erfindung ist vorgesehen, dass der Wärmetauscher im Kühlmittelströmungskanal stromab des Abgasrückführungskühlers angeordnet ist. Diese Ausgestaltung ermöglicht eine weitere Effizienzsteigerung, da das Kühlmittel stromabwärts des Abgasrückführungskühlers eine höhere Temperatur aufweist und somit die im Kühlmittel gespeicherte Wärme an die Abgasrückführungsleitung übertragen werden kann.

Mit Vorteil weist die Abgasrückführungsleitung im Bereich des Wärmetauschers eine glatte innere Oberfläche auf. Mit anderen Worten ist der Innenumfang der Abgasrückführungsleitung zumindest im Bereich des Wärmetauschers glatt, also ohne Erhebungen, Profilierungen oder Ausnehmungen, ausgeführt. Dies führt zum einen zu einem erhöhten effektiven Querschnitt der Abgasrückführungsleitung, was - wie oben beschrieben - insbesondere bei Niederdruck-Abgasrückführungssystemen von Vorteil ist. Darüber hinaus ist die Oberfläche zwischen Abgasrückführungsleitung und Abgas in dieser Ausgestaltung im Vergleich zu bekannten Geometrien in beziehungsweise Ausgestaltungen von Wärmetauschern, in denen Abgas gekühlt wird, möglichst klein. Daher wird möglichst wenig Wärme von der Abgasrückführungsleitung auf das Abgas übertragen, sodass der Effekt des stromauf der Abgasrückführungsleitung angeordneten Abgasrückführungskühlers, nämlich das Vorliegen eines gekühlten und somit komprimierten Abgases in der Abgasrückführungsanordnung, im Wesentlichen bestehen bleibt.

Erfindungsgemäß ist vorgesehen, dass der Wärmetauscher über einen Fluideinlass und einen Fluidauslass verfügt, wobei der Fluideinlass und der Fluidauslass benachbart zueinander angeordnet sind. Vorliegend ist unter benachbart zu verstehen, dass sowohl der Fluideinlass als auch der Fluidauslass auf einer Seite, also am gleichen Ende des sich entlang der Abgasrückführungsleitung erstreckenden Wärmetauschers, angeordnet sind. Mit anderen Worten befinden sich sowohl Fluideinlass als auch Fluidauslass am gleichen Ende des Wärmetauschers bezogen auf die Erstreckungsrichtung der Abgasrückführungsleitung. In dieser Ausgestaltung sind weitere Bauraumvorteile nutzbar, da nicht sichergestellt werden muss, dass je ein Fluidanschluss (Fluideinlass oder Fluidauslass) an beiden Enden des Wärmetauschers angeordnet werden kann.

Weiter ist vorgesehen, dass die Abgasrückführungsleitung, insbesondere im Bereich des Wärmetauschers eine Länge im Bereich von 50-700 mm, insbesondere im Bereich von 200-650 mm, bevorzugt im Bereich 250-600 mm aufweist. Abgasrückführungsanordnungen mit Abgasrückführungsleitungen der vorbeschriebenen Längen zeigten besonders große Effekte auf die Reduktion von Kondensat- und Eisbildung bei Verwendung des erfindungsgemäßen Wärmetauschers, wobei mit zunehmender Länge der relative Effekt auf den Wirkungsgrad zu nimmt. Mit zunehmender Länge der Abgasrückführungsleitung nimmt die Gefahr und Häufigkeit von Eisbildung zu, da sich das geführte Abgas abkühlt und so die Leitung weniger wärmt. Dieser Effekt wird durch die erfindungsgemäße Abgasrückführungsanordnung ausgeschaltet, sodass die Leitung in nahezu jeder Länge und jedem Verlauf ausgestaltet werden kann.

Mit Vorteil verlaufen die Abgasrückführungsleitung, ein im Wärmetauscher angeordneter Fluidzuführungskanal und ein im Wärmetauscher angeordneter Fluidableitungskanal im Bereich des Wärmetauschers parallel zueinander und stehen zumindest paarweise miteinander thermisch in Kontakt. Dabei handelt es sich um eine besonders einfach ausführbare und effektive Anordnung der einzelnen Strömungskanäle (Abgasströmungskanal, Fluidzuführungskanal und Fluidableitungskanal). Hierbei sind unter Schalen die einzelnen Strömungskanäle zu verstehen, welche direkt aneinander angrenzen, insbesondere paarweise nur durch eine gemeinsame Wand voneinander getrennt sind. Dabei umgibt zumindest einer der Fluidströmungskanäle die Abgasrückführungsleitung bezogen auf deren Querschnitt.

Erfindungsgemäß handelt es sich um eine dreischalige Anordnung, wobei die Abgasrückführungsleitung und somit der Abgasstrom als zentrale Schale beziehungsweise zentrales Rohr angeordnet ist, umgeben von dem Fluidzuführungskanal. Um diesen herum ist dann der Fluidableitungskanal angeordnet. Mit anderen Worten sind zumindest zwei der Strömungskanäle verschachtelt ineinander angeordnet, wobei stets die Abgasrückführungsleitung von dem Austauschfluid umspült wird. Der Vorteil dieser Ausgestaltungen liegt insbesondere in der Umspülung der Abgasrückführungsleitung durch das Austauschfluid, da dies zum einen einen hohen Wirkungsgrad der Wärmeübertragung vom Fluid auf die Abgasleitung sicherstellt und zum anderen einen möglichst wenig komplexen Aufbau des Wärmetauschers ermöglicht.

Eine den Fluidzuführungskanal vom Fluidableitungskanal trennende Wand ist bevorzugt in Strömungsrichtung längserstreckt, insbesondere konzentrisch um die Abgasrückführungsleitung ausgebildet und in einem Überführungsabschnitt unterbrochen. Im Überführungsabschnitt ist eine Überführung des Austauschfluids vom Zuführungskanal in den Fluidableitungskanal oder umgekehrt ermöglicht.

Der Wirkungsgrad der Wärmeübertragung ist ferner optimiert, wenn der Fluidzuführungskanal zwischen Abgasrückführungsleitung und Fluidableitungskanal angeordnet ist. Dies ist der Fall, wenn der Fluidzuführungskanal die Abgasrückführungsleitung und der Fluidableitungskanal den Fluidzuführungskanal konzentrisch umgeben.

Erfindungsgemäß ist somit vorgesehen, dass der Fluidzuführungskanal und der Fluidableitungskanal die Abgasrückführungsleitung umgibt. Diese Ausgestaltung hat den Vorteil, dass nur ein Strömungskanal (Zuführung oder Ableitung) als geschlossener Kanal ausgeführt wird. Mit anderen Worten verläuft einer der Fluidströmungskanäle in dem anderen und geht in einem Abschnitt, vorzugsweise an einem Ende in den anderen über. In diesem Abschnitt ist demnach eine fluidführende Verbindung zwischen den beiden Fluidströmungskanälen vorgesehen. Vorzugsweise entspricht die fluidführende Verbindung einer Kehre, sodass sich die Strömungsrichtung des Austauschfluids, vorzugsweise 180° ändert. Diese Ausgestaltung ist eine besonders platzsparende und bezogen auf den thermischen Übergang sehr effiziente Ausgestaltung eines Wärmetauschers.

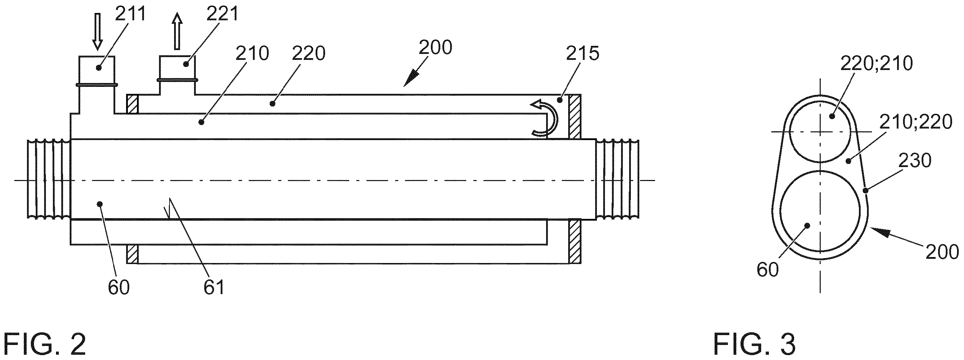

Ein weiterer Aspekt der Erfindung betrifft einen Wärmetauscher zur Anordnung in der erfindungsgemäßen Abgasrückführungsanordnung. Der erfindungsgemäße Wärmetauscher weist eine zu wärmende oder zu kühlende Leitung auf, zu der benachbart ein Fluidströmungskanal verläuft, der den Fluss eines Austauschfluids definiert. Erfindungsgemäß weist der Fluidströmungskanal eine Fluidzuführung und eine Fluidableitung auf, welche zueinander und zu der Leitung parallel verlaufen und mit der Leitung und/oder miteinander thermisch in Kontakt stehen. Der erfindungsgemäße Wärmetauscher ist zur Anordnung in der erfindungsgemäßen Abgasrückführungsanordnung geeignet und ermöglicht eine Erwärmung der Leitung durch Wärmeübertragung von einem Austauschfluid auf die Leitung bei minimalem Platzbedarf und optimiertem thermischen Übergang. Zudem führt die Ausgestaltung dazu, dass engere Bauräume nutzbar sind, sodass beispielsweise das Anordnen eines Vorlaufes bezogen benachbart zur Abgasrückführungsleitung in einem Bereich, in dem der Durchmesser aufgrund der Anordnung der Fluidströmungskanäle zueinander reduziert ist (siehe beispielsweise Figur 3). Bezogen auf Figur 3 ergäbe sich, dass die Fluidableitung als offener Strömungskanal ausgeführt ist, also die anderen beiden umgibt, ohne selbst in einem diskreten Rohr benachbart zu diesen geführt zu werden.

Die Anordnung der Fluidströmungskanäle im Sinne des genannten Rohr-im-Rohr-Prinzips hat zudem den Vorteil, dass das außen geführte Fluid, insbesondere das Austauschfluid, stets eine gewisse Isolationswirkung zwischen Außentemperatur und innerem Rohr hat, insbesondere rückzuführendem Abgas.

Das Fluid wird im erfindungsgemäßen Wärmetauscher bevorzugt in einem ersten Abschnitt einer ersten Strömungsrichtung parallel zur Erstreckungsrichtung der Leitung geführt und in einem zweiten Abschnitt in einer der ersten Strömungsrichtung entgegengesetzten Strömungsrichtung, wiederum parallel zur Erstreckungsrichtung der Leitung, geführt, wobei beide Abschnitte vorzugsweise über eine Kehre strömungstechnisch miteinander verbunden sind.

Der erfindungsgemäße Wärmetauscher wird bevorzugt in der erfindungsgemäßen Abgasrückführungsanordnung angeordnet. Alternativ ist er auch mit umgekehrtem Wirkprinzip, also zu einer Wärmeübertragung von einem in der Leitung geführten Fluid auf das Austauschfluid, einsetzbar.

Ein weiterer Aspekt der Erfindung betrifft eine Brennkraftmaschine umfassend eine erfindungsgemäße Abgasrückführungsanordnung und oder einen erfindungsgemäßen Wärmetauscher.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1A: eine schematische Darstellung der Abgasrückführungsanordnung in einer bevorzugten Ausgestaltung der Erfindung,
- Figur 1B: eine schematische Darstellung der Abgasrückführungsanordnung in einer weiteren bevorzugten Ausgestaltung der Erfindung,
- Figur 2: eine schematische Darstellung eines Längsschnitts des erfindungsgemäßen Wärmetauschers in einer bevorzugten Ausführungsform, und
- Figur 3: eine schematische Darstellung eines Querschnitts eines nicht erfindungsgemäßen Wärmetauschers.

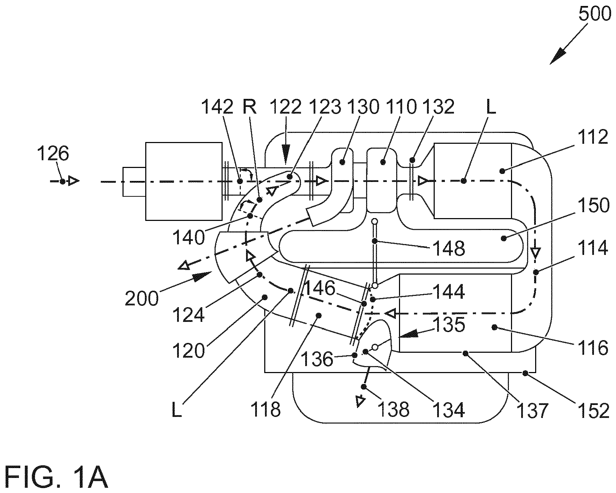

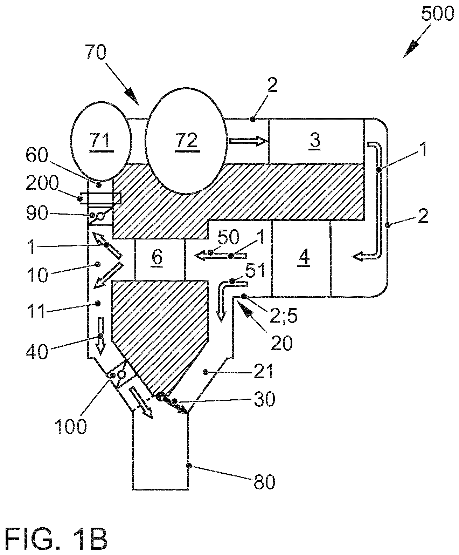

Zunächst wird der Aufbau einer Abgasrückführungsanordnung in zwei bevorzugten Ausgestaltungen anhand der Figuren 1A und 1B beschrieben. Wesentliche Elemente der Abgasrückführungsanordnung beziehungsweise -systems sind der Abgasrückführungskühler 6, 118 sowie die stromabwärts des Abgasrückführungskühlers 6, 118 angeordnete erste Abzweigung 10, 136.

Die in Figur 1A dargestellte, bevorzugte Ausführungsform einer erfindungsgemäßen Niederdruck-Abgasrückführungs-Strecke (ND-AGR-Strecke) für eine ansonsten nicht näher dargestellte Brennkraftmaschine zum Rückführen von Abgas (Abgasrückführung- AGR) in einen Frischluft- beziehungsweise Verbrennungsluftmassenstrom umfasst eine Turbine 110 eines Abgasturboladers, einen Katalysator 112, ein Überströmgehäuse 114, einen Partikelfilter 116, beispielsweise in Form eines Dieselpartikelfilters, einen AGR-Kühler 118, eine AGR-Leitung 120 und eine Einleitstelle 122 zum Einleiten von rückgeführtem Abgas 24 in einen Frischluftstrom 126 mit einem AGR-Einleitungsstutzen 128.

Weiterhin ist in Figur 1A dargestellt ein Verdichter 130 des Abgasturboladers, ein Flansch 132 zwischen Turbine 110 und Katalysator 112, eine Abgasstauklappe 134 in einem abzweigenden Abgasrohr 136, welches zum Abführen von nicht rückgeführtem Abgas 138 dient, ein AGR-Ventil 140 in Form einer Drosselklappe, eine Ansaugdrosselklappe 142, ein AGR-Filter 144 in Form eines kalottenförmigen Gitters, einen Flansch 146 zwischen dem Partikelfilter 116 und dem AGR-Kühler 118, eine Stütze 148 für den Abgasturbolader und einen Abgaskrümmer 150, der als Modul einstückig mit einem Turbinengehäuse der Turbinen 10 ausgebildet ist, und ein Motorgehäuse 152 der Brennkraftmaschine.

Ein den Partikelfilter 116 aufnehmendes Gehäuse 137 weist eine integrierte Abzweigung 135 auf, an welche das Abgasrohr 136 angeschlossen ist. Das AGR-Filter 144 ist am Flansch 146 konzentrisch zu diesem angeordnet. Die stromabwärts in der Abgasanlage angeordnete Abgasstauklappe 134 dient zum Einstellen eines Abgasstaudruckes und ist optional in den Partikelfilter 116 integriert beziehungsweise an diesen direkt angeflanscht. Der Niederdruck-AGR-Kühler 118 ist längs durchströmt und leicht geneigt, damit gegebenenfalls Kondensat abläuft und eine Entlüftung sichergestellt ist. Der AGR-Kühler 118 ist ohne ein weiteres Leitungsstück direkt am Partikelfilter 116 montiert. Die AGR-Leitung 120 ist direkt mit einem Austrittstrichter des AGR-Kühlers 118 verbunden und ist optional aus einem Kunststoff gefertigt.

Ein primäres Ziel der Erfindung besteht darin, den Strömungswiderstand der gesamten Gas-Strecke vom Turbinenaustritt bis zum Verdichtereintritt auf ein absolutes Minimum zu verringern. Da bei gängigen Abgasturboladern der Verdichtereintritt koaxial und gleichgerichtet mit dem Turbinenaustritt angeordnet ist, wird das zurückzuführende Abgas 124 in einem geschlossenen Kreislauf, wie durch eine strichpunktierte Linie L in Figur 1A angedeutet, geführt.

Da jede Umlenkung einen unerwünschten Widerstand erzeugt, ist es das Ziel der Erfindung, die Summe aller Umlenkungen nicht viel größer als 3600 werden zu lassen. Hierzu sind alle durchströmten Komponenten, die den Katalysator 112, den Partikelfilter 116, den EGR-Filter 144, den EGR-Kühler 118, das Überströmgehäuse 114 und das EGR-Ventil 140 umfassen, im Wesentlichen kreisförmig zueinander angeordnet. Die Winkeldifferenzen zwischen den Strömungsrichtungen der ein- und ausströmenden Gase zu der Durchströmungsrichtung des jeweiligen zuvor genannten Bauteils betragen nicht mehr als jeweils 90° und die Ablenkungen erfolgen alle in derselben Richtung, beispielsweise im Uhrzeigersinn, wie in Figur 1A dargestellt.

Der motornahe Katalysator 112 ist koaxial zum Turbinenrad angeordnet und direkt am Turboladergehäuse beziehungsweise an der Turbine 110 befestigt. Dies bietet darüber hinaus weitere Vorteile. Das Anspringverhalten des Katalysators ist optimal, da nahezu keine Wärme nach dem Turbolader verloren geht, und die Anströmung des Katalysators ist sehr gleich verteilt.

Außerdem lässt sich ein kostengünstiger Katalysator mit kreisförmigem Querschnitt verwenden.

Der Katalysator 112 ist mittels des strömungsoptimierten Überströmgehäuses 114 direkt mit dem Partikelfilter 116 (DPF) verbunden, der annähernd parallel zum Katalysator 112 angeordnet ist. Auch der Partikelfilter 116 ist wahlweise aus Kostengründen mit einem kreisförmigen Querschnitt ausgebildet.

Die Einheit aus Katalysator 112 und Partikelfilter 116 umschließt zusätzlich mindestens einen Abschnitt des Abgaskrümmers 50, sodass Katalysator 112 und Partikelfilter 116 vom Abgaskrümmer 50 mit thermischer Energie versorgt werden. Diese Baueinheit wird optional durch ein gemeinsames Wärmeabschirmelement isoliert. Dies erhält gleichzeitig die gewünschte Wärme beziehungsweise thermische Energie in den Bauteilen Katalysator 112 und Partikelfilter 116 und schützt angrenzende Fahrzeug- und Motorbauteile vor Überhitzung.

Der AGR-Kühler 118 ist zur Verringerung des Strömungswiderstandes ohne innere Umlenkungen längs durchströmt und zur Vereinfachung der Montage und zur Vermeidung kostspieliger Leitungen direkt an einen Austrittstrichter des Partikelfilters 116 angebaut. Der Staudruck (die kinetische Energie) der aus dem Partikelfilter 116 ausströmenden Gase reduziert zusätzlich die benötigte Druckdifferenz. Der AGR-Kühler 118 kann bei einer Wasserkühlung unter anderem zur Entlüftung des Wasserraumes leicht geneigt angeordnet sein. Der Querschnitt des AGR-Kühlers 118 ist bevorzugt aus Kostengründen kreisförmig ausgebildet.

Der AGR-Filter 144 dient zum Fernhalten von Partikeln aus dem Partikelfilter 116 vom Verdichter 130 und vom Motor. Der AGR-Filter 144 ist beispielsweise als kalottenförmiges oder kegeliges oder planes Gewebe oder Geflecht oder Sieb direkt in die Verbindungsstelle (Flansch) zwischen Partikelfilter 116 beziehungsweise Gehäuse 137 und AGR-Kühler 118 eingelegt und gehalten. Zur Verringerung des Strömungswiderstandes weist der idealerweise kreisrunde Flansch 146 einen möglichst großen Durchmesser auf.

Die AGR-Leitung 120 stromabwärts des AGR-Kühlers 118 ist aus Kostengründen beispielsweise aus einem Kunststoff gefertigt. Die AGR-Leitung 120 weist einen harmonischen Querschnittsverlauf und einen harmonischen, strömungsoptimierten Krümmungsverlauf auf.

Das AGR-Ventil 140 ist zumindest im geöffneten Zustand längsdurchströmt und weist einen minimalen Strömungswiderstand auf. Bevorzugt ist das AGR-Ventil 140 als Drosselklappe ausgebildet und gegebenenfalls aus einem Kunststoff gefertigt und optional in die AGR-Leitung 120 oder den Einleitstutzen 128 integriert.

Der Einleitstutzen 128 ist optional ebenfalls aus einem Kunststoff hergestellt und primär auf einen minimalen Strömungswiderstand optimiert. Einleitstutzen 128, Ansaug-Drosselklappe 142 (soweit erforderlich) und AGR-Ventil 140 sind bevorzugt in einem gemeinsamen Gehäuse (beispielsweise aus Kunststoff) angeordnet. Drosselklappe 142 und AGR-Ventil 140 werden optional von einem gemeinsamen Steller betätigt, sodass beispielsweise zunächst das AGR-Ventil 140 voll geöffnet wird, und danach zusätzlich die Ansaug-Drosselklappe 142 geschlossen wird. Die Abgasstauklappe 134 ist, sofern noch erforderlich, direkt im Austrittstrichter des Partikelfilters 116 integriert oder direkt an diesen angeflanscht. Hierdurch ist es möglich, eine selbsttätige (federbetätigte) Klappe anstatt einer elektrischen Klappe einzusetzen.

Die Turboladerstütze 148 ist bevorzugt motorseitig zusammen mit dem Partikelfilter 116 entweder an dem Zwischenflansch 146 oder an einem Butzen im Partikelfilter 116 verschraubt. Falls innerhalb der Baueinheit aus Katalysator 112 und Partikelfilter 116 Wärmedehnungen aufgenommen werden müssen, sind Schiebesitze zwischen jeweils Katalysator 112 und Turbine 110, Katalysator 112 und Überströmgehäuse 114, Überströmgehäuse 114 und Partikelfilter 116 oder Partikelfilter 116 und Einleitstelle 122 vorgesehen. Der AGR-Kühler 118 ist beispielsweise mittels eines Bajonett-Verschlusses am Zwischenflansch 146 beziehungsweise am Ausgangstrichter des Partikelfilter 116 montiert.

Durch die erfindungsgemäße für ein ND-AGR- System optimierte Anordnung und Ausführung aller beteiligten Bauteile wird der Druckverlust in der ND-AGR-Strecke soweit verringert, dass der Kraftstoffverbrauch des Motors nicht höher ist als bei einem leistungsgleichen Motor mit Hochdruck-AGR-System und es kann auf eine elektrische Regelklappe im Abgasstrang sowie auf ein Hochdruck-AGR-System verzichtet werden.

Figur 1B zeigt eine weitere bevorzugte Ausführung des Aufbaus einer Abgasanlage in einer Verbrennungskraftmaschine mit Fokus auf die Anordnung der erfindungsgemäßen Abgasrückführungsanordnung. An die erste Abzweigung 10 schließt sich eine erste Abgasableitung 11 zur Ableitung von Abgas an die Umgebung an sowie eine Rückführungsleitung 60 zur Leitung von Abgas in Richtung des Abgas-Turboladers 70. Somit lässt sich das gesamte Abgas durch den Abgasrückführungskühler 6 leiten und erst nach diesem in einzelne Volumenströme zwecks Ableitung an die Umgebung und Zuleitung zum Abgas-Turbolader aufteilen.

Vorteilhafterweise ist die erfindungsgemäße Anordnung zur Abgasrückführung mit den weiteren in Figur 1B dargestellten Komponenten ausgestaltet. Das heißt, dass sie den Abgas-Turbolader 70 umfassen kann, aus dessen Turbine 72 Abgas in Richtung der Strömung 1 austritt und einem Katalysator 3 und stromabwärts des Katalysators einem Partikelfilter 4 zugeführt wird. Dabei ist die Erfindung nicht auf die Anordnung eines Katalysators und eines Partikelfilters eingeschränkt. Eine Frischluftanlage zur Zuführung von Frischluft- und Abgasgemisch in den Motor ist dabei in der Figur 1B nicht dargestellt.

Die Zuleitung des Abgases zu den einzelnen dargestellten Komponenten erfolgt mittels strömungstechnischer Verbindungen 2, wie zum Beispiel Leitungen, und/oder durch integrale Anordnung verschiedener Komponenten in einem Gehäuse.

Stromabwärts des Partikelfilters 4 ist eine zweite Abzweigung 20 vorgesehen, in der der Volumenstrom aufgeteilt wird in den Volumenstrom 50 durch den Abgasrückführungskühler 6 sowie in den abzuleitenden Volumenstrom 51. Der Volumenstrom durch den Abgasrückführungskühler 50 wird, wie bereits beschrieben, stromabwärts des Abgasrückführungskühlers 6 in den Volumenstrom des Abgases in der ersten Abgasleitung 40 sowie in den zum Abgasturbolader 70 zurückzuführenden Gasstrom durch die Rückführungsleitung 60 aufgeteilt. Diese Rückführungsleitung 60 schließt an den Verdichter 71 des Abgas-Turboladers 70 an und führt somit das Abgas dem Verdichter zu, sodass dieser das zurückgeführte Abgas verdichtet und gegebenenfalls gleich mit Frischluft vermischt und der Brennkraftmaschine zuführt.

Die zweite Abgasableitung 21 zweigt somit von der zweiten Abzweigung 20 von der Zuleitung 5 ab, die das gesamte Abgas transportiert. Die an der ersten Abzweigung 10 abgehende erste Abgasableitung 11 ist zwecks Gewichts- und Bauraumeinsparung mit der zweiten Abgasableitung 21 in der Einmündung 80 verbunden. Zur Regelung des Volumenstromes durch den Abgasrückführungskühler 6 ist in der zweiten Abgasableitung 21 ein erstes Ventil 30 angeordnet. Dieses erste Ventil 30 ist in Figur 1B in geschlossener Stellung dargestellt, sodass die zweite Abgasableitung 21 geschlossen ist und somit das gesamte Abgas durch den Abgasrückführungskühler 6 geleitet wird und dieser demzufolge die gesamte Menge des Abgases verwerten kann.

Ist eine Verwertung der Wärme des genannten Abgases durch den Abgasrückführungskühler nicht gewünscht, kann das erste Ventil 30 geöffnet werden, sodass Abgas in verstärktem oder vollständigem Maß durch die zweite Abgasableitung im abzuleitenden Volumenstrom 51 an die Umgebung abgeleitet wird.

Zur Einstellung, wieviel zurückzuführendes Abgas nach vollständiger Verwertung im Abgasrückführungskühler 6 dem Verdichter 71 des Abgas-Turbo-Laders 70 zugeführt wird, ist in der Rückführungsleitung 60 ein zweites Ventil 90 angeordnet. Bei Schließung dieses zweiten Ventils 90 kann durch den Abgasrückführungskühler 6 geleitetes Abgas nicht zum Verdichter 71 strömen, sondern muss durch die erste Abgasableitung 11 an die Umgebung abgeleitet werden.

Ergänzend kann außerdem in der ersten Abgasableitung 11 ein drittes Ventil 100 angeordnet sein, mit welchem die Abgasrückführrate erhöht werden kann.

Das erste Ventil 30 kann dabei derart ausgestaltet sein, dass es wie in Figur 1B in einer Position die zweite Abgasableitung 21 vollständig schließt und dabei die erste Abgasableitung 11 vollständig öffnet und bei Umschaltung die erste Abgasableitung 11 vollständig schließt und die zweite Abgasableitung 21 vollständig öffnet, wie es mit der gestrichelten Linie am Ende der ersten Abgasableitung 11 angedeutet ist.

Insbesondere in dieser Ausgestaltung erübrigt sich die Anordnung des bereits erwähnten dritten Ventils.

Mittels der erfindungsgemäßen Abgasrückführungsanordnung lassen sich bei Schließung des ersten Ventils 30 der gesamte Volumenstrom des Abgases durch den Abgasrückführungskühler 6 hindurchführen und somit die gesamte Abgaswärme in diesem nutzen.

Die Abgasrückführungsleitung 60 weist zudem einen Wärmetauscher 200 auf, der eingerichtet ist, Wärme von einem Austauschfluid auf die Abgasrückführungsleitung 60 zu übertragen. Der Wärmetauscher kann beispielsweise wie in der Figur 2 dargestellt ausgebildet sein.

Es wird besonders hervorgehoben, dass die oben beschriebene Anordnung nur eine Ausführungsform der erfindungsgemäßen Abgasrückführungsanordnung beschreibt.

Erfindungswesentlich ist jedoch lediglich die erfindungsgemäße Anordnung des Wärmetauschers 200, welcher an der Abgasrückführungsleitung 60, also in einem Bereich stromab des Abgasrückführungskühlers 6, insbesondere stromab der Abzweigung 10 und stromauf der Verbrennungseinheit beziehungsweise des Abgasturboladers 70 angeordnet ist.

Figur 2 zeigt eine schematische Darstellung eines Längsschnitts eines erfindungsgemäßen Wärmetauschers 200 in einer bevorzugten Ausführungsform. Gezeigt ist ein erfindungsgemäßer Wärmetauscher 200, der an eine Abgasrückführungsleitung 60 angeordnet ist. In der gezeigten Ausführungsform umfasst der Wärmetauscher 202 Fluidströmungskanäle 210 und 220, nämlich einen Fluidzuführungskanal 210 und einen Fluidableitungskanal 220.

Diese sind in der gezeigten Ausführungsform parallel zueinander und parallel zur Abgasrückführungsleitung 60 ausgerichtet.

Der Fluidzuführungskanal 210 ist an einem ersten Ende mit einem Fluideinlass 211 fluidführend verbunden, während der Fluidableitungskanal 220 an einem ersten Ende fluidführend mit einem Fluidauslass 221 verbunden ist. Der Fluidzuführungskanal 10 und der Fluidableitungskanal 220 sind im Bereich einer Überleitung 215 fluidführend miteinander verbunden, wobei die Überleitung 215 jeweils am zweiten Ende des betreffenden Fluidströmungskanals 210 beziehungsweise 220, also an dem dem Fluidauslass 221 beziehungsweise dem Fluideinlass 211 abgewandten Ende des jeweiligen Fluidströmungskanals 210, 220, angeordnet ist. In der gezeigten Ausführungsform verlaufen die Fluidströmungskanäle 210 und 220 im Wesentlichen längserstreckt und parallel zur Erstreckungsrichtung der Abgasrückführungsleitung 60. Im Bereich der Überleitung 215 erfährt das in den Strömungskanälen 210, 220 geführte Austauschfluid eine Umkehr der Strömungsrichtung. Dies kann dadurch realisiert sein, dass die Strömungskanäle 210, 220 und 60 ineinander verschachtelt angeordnet sind, wobei eine Trennwand zwischen Fluidzuführungskanal 210 und Fluidableitungskanal 220 im Bereich der Überleitung 215 unterbrochen ist und somit die fluidführende Verbindung zwischen Fluidzuführungskanal 210 und Fluidableitungskanal 220 ausgebildet wird.

Bei der in Figur 2 gezeigten Ausführungsform des erfindungsgemäßen Wärmetauschers 200 handelt es sich um eine dreischalige Ausgestaltung, wobei sich dreischalig auf die Anordnung der Strömungskanäle 60, 210, 220 zueinander bezieht. Die innere Schale wird durch die Abgasrückführungsleitung 60 ausgebildet, welche das Zentrum der Anordnung darstellt. Die die erste Schale, also in der gezeigten Ausführungsform die Abgasrückführungsleitung 60, konzentrisch umgebende zweite Schale ist in der gezeigten Ausführungsform der Fluidzuführungskanal 210, welcher wiederum konzentrisch vom Fluidableitungskanal 220 umgeben wird. Der Aufbau kann demnach als auf einem Rohr-im-Rohr-Prinzip basierend beschrieben werden, wobei der Durchmesser ausgehend von der inneren Schale beziehungsweise des inneren Rohres (Abgasrückführungsleitung 60) hin zur äußeren Schale beziehungsweise Rohr (Fluidableitungskanal 220) ansteigt.

Die Abgasrückführungsleitung 60 ist in der gezeigten Ausgestaltung als linear verlaufendes Rohr ausgeführt. Dabei handelt es sich nur um eine bevorzugte Ausführungsform beziehungsweise um einen Ausschnitt der Abgasrückführungsleitung 60 in einer erfindungsgemäßen Abgasrückführungsanordnung. Über die gezeigte einfache Ausführung hinaus kann die Abgasrückführungsleitung 60 auch als gebogenes oder gewundenes Rohr ausgeführt sein. Zudem ist eine innere Oberfläche 61 der Abgasrückführungsleitung 60 im Wesentlichen glatt, also ohne Erhebungen, Vertiefungen oder Profilierung ausgebildet. Dabei bezieht sich die Bezeichnung glatt lediglich auf die Oberflächenbeschaffenheit und nicht auf den Verlauf der gesamten Abgasrückführungsleitung 60. So kann auch die innere Oberfläche 61 eines gewundenen oder geknickten Rohres glatt im Sinne der Erfindung sein.

In Figur 3 ist der Wärmetauscher 200 in einer nicht erfindungsgemäß Ausführungsform gezeigt, wobei die Abgasrückführungsanordnung im Bereich des Wärmetauschers 200 im Querschnitt dargestellt ist. Im Wesentlichen entspricht die gezeigte Ausführungsform der Figur 3 der in Figur 2 gezeigten Ausführungsform. Ebenso wie in Figur 2 ist der Wärmetauscher 200 als mehrschaliger Aufbau um die Abgasrückführungsleitung 60 angeordnet. Im Unterschied zu der in Figur 2 gezeigten Ausführungsform ist die Abgasrückführungsleitung 60 jedoch lediglich von einem der Fluidströmungskanäle 210, 220 umgeben. Einer der Fluidströmungskanäle 210, 220 bildet in der gezeigten Ausführungsform die äußere Schale, welche in Form eines nicht runden Rohres 230 ausgebildet ist. Innerhalb dieses nicht runden Rohres 230 sind die Abgasrückführungsleitung 60 und der zweite Fluidströmungskanal 220, 210 benachbart zueinander und parallel zur äußeren Schale angeordnet. Dabei ist die Abgasrückführungsleitung 60 ebenso wie der in Figur 2 gezeigten Ausführungsform gegen das Austauschfluid abgeschlossen, sodass kein Fluidaustausch zwischen Fluidströmungskanal 210, 220 und Abgasrückführungsleitung 60 erfolgt. Die beiden Fluidströmungskanäle 210, 220 hingegen sind durch eine Überleitung 215 (in Figur 3 nicht gezeigt) fluidführend miteinander verbunden. Dies kann dadurch realisiert werden, dass der zweite Fluidströmungskanal 220, 210 durch ein Rohr oder eine Wand begrenzt ist, welche/s eine geringere Länge aufweist als das nicht runde Rohr 230, welches den ersten Fluidströmungskanal 210 oder 220 begrenzt. Zur optimalen Reduzierung von Strömungswiderständen, insbesondere im Bereich der Überleitung ist von Vorteil, wenn in der Ausführungsform der Figur 3 die äußere Schale 230, also das nicht runde Rohr, die Fluidableitung 220 begrenzt und die Zuführung des Austauschfluids über die im Innern der äußeren Schale 230 angeordnete, insbesondere als verkürztes Rohr oder Wand ausgeführte, Fluidzuführung 210 erfolgt.

In der erfindungsgemäßen Abgasrückführungsanordnung 500 wird im Wärmetauscher 200 Wärme vom Austauschfluid auf die Abgasrückführungsleitung 60 übertragen und die Abgasrückführungsleitung 60 somit in diesem Bereich erwärmt. Somit werden wirkungsvoll eine Kondensat- und/oder Eisbildung in der Abgasrückführungsleitung 60 verhindert und die nachgeschalteten Bauteile geschont sowie eine ungewollte Druckminderung in der Abgasrückführung verhindert.

### Bezugszeichenliste

- 500: Abgasrückführungsanordnung

- 1: Richtung der Strömung
- 2: strömungstechnische Verbindung
- 3: Katalysator
- 4: Partikelfilter
- 5: Zuleitung
- 6: Abgasrückführungskühler

- 10: erste Abzweigung
- 11: erste Abgasableitung

- 20: zweite Abzweigung
- 21: zweite Abgasableitung

- 30: erstes Ventil
- 31: Klappe
- 32: Gelenk

- 40: Volumenstrom des Abgases in der ersten Abgasableitung

- 50: Volumenstrom durch den Abgasrückführungskühler
- 51: abzuleitender Volumenstrom

- 60: Rückführungsleitung
- 61: innere Oberfläche

- 70: Abgasturbolader
- 71: Verdichter
- 72: Turbine
- 80: Einmündung
- 90: zweites Ventil
- 100: drittes Ventil

- 110: Turbine
- 112: Katalysator
- 114: Überströmgehäuse
- 116: Partikelfilter
- 118: Abgasrückführungskühler

- 120: Abgasrückführungsleitung
- 122: Einleitstelle
- 124: rückgeführtes Abgas
- 126: Frischluftstrom
- 128: AGR-Einleitstutzen

- 130: Verdichter
- 132: Flansch
- 134: Abgasstauklappe
- 135: integrierte Abzweigung
- 136: abzweigendes Abgasrohr
- 137: Gehäuse
- 138: nicht rückgeführtes Abgas

- 140: AGR-Ventil
- 142: Ansaugdrosselklappe
- 144: Filter
- 146: Flansch
- 148: Stütze

- 150: Abgaskrümmer
- 152: Motorgehäuse

- 200: Wärmetauscher
- 210: Fluidzuführungskanal
- 211: Fluideinlass
- 215: Überleitung/Kehre

- 220: Fluidableitungskanal
- 221: Fluidauslass

- 230: äußere Schale/nicht rundes Rohr

## Patentansprüche

1. Wärmetauscher (200) zur Anordnung in einer Abgasrückführungsanordnung (500), aufweisend eine zu wärmende oder zu kühlende Abgasrückführungsleitung (60, 120) und je einen zu dieser benachbart verlaufenden, den Fluss eines Austauschfluids definierenden Fluidzuführungskanal (210) und Fluidableitungskanal (220), wobei die Abgasrückführungsleitung (60, 120) innenliegend angeordnet ist und von dem Fluidzuführungskanal (210) umgeben ist, **dadurch gekennzeichnet, dass** der Fluidzuführungskanal (210) von dem Fluidableitungskanal (220) umgeben ist, und dass der Wärmetauscher (200) einen dreischaligen Aufbau aufweist, sodass der Fluidzuführungskanal (210) und der Fluidableitungskanal (220) zueinander und zu der Abgasrückführungsleitung (60, 120) parallel verlaufen und mit der Abgasrückführungsleitung (60, 120) und zumindest paarweise thermisch miteinander in Kontakt stehen.

2. Wärmetauscher (200) nach Anspruch 1, **dadurch gekennzeichnet, dass** die Abgasrückführungsleitung (60, 120) eine glatte innere Oberfläche (61) aufweist.

3. Wärmetauscher (200) nach Anspruch 1 oder 2, **dadurch gekennzeichnet, dass** der Wärmetauscher (200) über einen Fluideinlass (211) und einen Fluidauslass (221) verfügt, wobei der Fluideinlass (211) und der Fluidauslass (221) benachbart zueinander angeordnet sind.

4. Abgasrückführungsanordnung (500) zur zumindest teilweisen Rückführung von Abgasen einer Verbrennungseinrichtung in den der Verbrennungseinrichtung zuzuführenden Gasstrom, umfassend einen in einem Strömungskanal für das rückzuführende Abgas angeordneten Abgasrückführungskühler (6, 118) zur Kühlung des Abgases und zur Ableitung von Abgaswärme, eine stromabwärts des Abgasrückführungskühlers (6, 118) mit dem Gasstrom strömungstechnisch verbundene Abgasrückführungsleitung (60, 120), und einen von einem Austauschfluid durchströmbarer Wärmetauscher (200) nach einem der Ansprüche 1 bis 3, der in der Abgasrückführungsleitung (60, 120) angeordnet ist.

5. Abgasrückführungsanordnung (500) nach Anspruch 4, **dadurch gekennzeichnet, dass** das Austauschfluid ein Kühlmittel, insbesondere ein in einem Kühlkreislauf der Verbrennungseinrichtung und/oder des Abgasrückführungskühlers (6, 118) geführtes Kühlmittel, ist.

6. Abgasrückführungsanordnung (500) nach Anspruch 4, **dadurch gekennzeichnet, dass** der Wärmetauscher (200) in einem Fluidströmungskanal des Kühlkreislaufs stromabwärts des Abgasrückführungskühlers (6, 118) angeordnet ist.

7. Abgasrückführungsanordnung (500) nach einem der Ansprüche 4 bis 6, **dadurch gekennzeichnet, dass** die Abgasrückführungsanordnung (500) ausgebildet ist, das Abgas durch die Abgasrückführungsleitung (60, 120) zu leiten, wenn das Austauschfluid an einem Fluideinlass (211), die Umgebungsluft und/oder das Kühlmittel eine Mindesttemperatur erreicht oder überschreitet.

8. Brennkraftmaschine umfassend eine Abgasrückführungsanordnung nach einem der Ansprüche 4 bis 7 und/oder einen Wärmetauscher nach einem der Ansprüche 1 bis 3.

## Claims

1. Heat exchanger (200) for arranging in an exhaust gas recirculation arrangement (500), having an exhaust gas recirculation line (60, 120) to be heated or to be cooled and a fluid feed duct (210) and a fluid discharge duct (220) each of which extends adjacently with respect to said exhaust gas recirculation line (60, 120) and define the flow of an exchanging fluid, the exhaust gas recirculation line (60, 120) being arranged in the inside and being surrounded by the fluid feed duct (210), **characterized in that** the fluid feed duct (210) is surrounded by the fluid discharge duct (220), and **in that** the heat exchanger (200) has a triple-shell construction, with the result that the fluid feed duct (210) and the fluid discharge duct (220) run parallel to one another and to the exhaust gas recirculation line (60, 120), and are in contact with the exhaust gas recirculation line (60, 120) and thermally with one another at least in pairs.

2. Heat exchanger (200) according to Claim 1, **characterized in that** the exhaust gas recirculation line (60, 120) has a smooth inner surface (61).

3. Heat exchanger (200) according to Claim 1 or 2, **characterized in that** the heat exchanger (200) has a fluid inlet (211) and a fluid outlet (221), the fluid inlet (211) and the fluid outlet (221) being arranged adjacently with respect to one another.

4. Exhaust gas recirculation arrangement (500) for the at least partial recirculation of exhaust gases of a combustion device into the gas stream which is to be fed to the combustion device, comprising
an exhaust gas recirculation cooler (6, 118) which is arranged in a flow duct for the exhaust gas to be recirculated for cooling the exhaust gas and for dissipating exhaust gas heat,
an exhaust gas recirculation line (60, 120) which is connected in flow terms to the gas stream downstream of the exhaust gas recirculation cooler (6, 118), and
a heat exchanger (200) according to one of Claims 1 to 3 which can be flowed through by an exchanging fluid and is arranged in the exhaust gas recirculation line (60, 120).

5. Exhaust gas recirculation arrangement (500) according to Claim 4, **characterized in that** the exchanging fluid is a coolant, in particular a coolant which is conducted in a cooling circuit of the combustion device and/or of the exhaust gas recirculation cooler (6, 118) .

6. Exhaust gas recirculation arrangement (500) according to Claim 4, **characterized in that** the heat exchanger (200) is arranged in a fluid flow duct of the cooling circuit downstream of the exhaust gas recirculation cooler (6, 118).

7. Exhaust gas recirculation arrangement (500) according to one of Claims 4 to 6, **characterized in that** the exhaust gas recirculation arrangement (500) is configured to conduct the exhaust gas through the exhaust gas recirculation line (60, 120) if the exchanging fluid at a fluid inlet (211), the ambient air and/or the coolant reach/reaches or exceed/exceeds a minimum temperature.

8. Internal combustion engine comprising an exhaust gas recirculation arrangement according to one of Claims 4 to 7 and/or a heat exchanger according to one of Claims 1 to 3.

## Revendications

1. Échangeur de chaleur (200) destiné à être agencé dans un agencement de recirculation de gaz d'échappement (500), comprenant une conduite de recirculation de gaz d'échappement à réchauffer ou à refroidir (60, 120) et respectivement un canal d'alimentation en fluide (210) et un canal d'évacuation de fluide (220), adjacents à celle-ci, définissant le flux d'un fluide d'échange, la conduite de recirculation de gaz d'échappement (60, 120) étant agencée à l'intérieur et étant entourée par le canal d'alimentation en fluide (210), **caractérisé en ce que** le canal d'alimentation en fluide (210) est entouré par le canal d'évacuation de fluide (220), et
**en ce que** l'échangeur de chaleur (200) présente une structure à triple paroi, de telle sorte que le canal d'alimentation en fluide (210) et le canal d'évacuation de fluide (220) soient parallèles l'un à l'autre et à la conduite de recirculation de gaz d'échappement (60, 120), et soient en contact avec la conduite de recyclage de gaz d'échappement (60, 120) et au moins en paire thermiquement l'un avec l'autre.

2. Échangeur de chaleur (200) selon la revendication 1, **caractérisé en ce que** la conduite de recirculation de gaz d'échappement (60, 120) présente une surface intérieure lisse (61).

3. Échangeur de chaleur (200) selon la revendication 1 ou 2, **caractérisé en ce que** l'échangeur de chaleur (200) dispose d'une entrée de fluide (211) et d'une sortie de fluide (221), l'entrée de fluide (211) et la sortie de fluide (221) étant agencées adjacentes l'une à l'autre.

4. Agencement de recirculation de gaz d'échappement (500) pour la recirculation au moins partielle de gaz d'échappement d'un dispositif de combustion dans le courant gazeux alimentant le dispositif de combustion, comprenant :
un refroidisseur de recirculation de gaz d'échappement (6, 118) agencé dans un canal d'écoulement pour le gaz d'échappement à recirculer, pour le refroidissement du gaz d'échappement et pour l'évacuation de chaleur du gaz d'échappement,
une conduite de recirculation de gaz d'échappement (60, 120) reliée fluidiquement avec le courant gazeux en aval du refroidisseur de recirculation de gaz d'échappement (6, 118), et
un échangeur de chaleur (200) selon l'une quelconque des revendications 1 à 3, pouvant être traversé par un fluide d'échange, qui est agencé dans la conduite de recirculation de gaz d'échappement (60, 120) .

5. Agencement de recirculation de gaz d'échappement (500) selon la revendication 4, **caractérisé en ce que** le fluide d'échange est un agent réfrigérant, notamment un agent réfrigérant acheminé dans un circuit de refroidissement du dispositif de combustion et/ou du refroidisseur de recirculation de gaz d'échappement (6, 118) .

6. Agencement de recirculation de gaz d'échappement (500) selon la revendication 4, **caractérisé en ce que** l'échangeur de chaleur (200) est agencé dans un canal d'écoulement de fluide du circuit de refroidissement en aval du refroidisseur de recirculation de gaz d'échappement (6, 118).

7. Agencement de recirculation de gaz d'échappement (500) selon l'une quelconque des revendications 4 à 6, **caractérisé en ce que** l'agencement de recirculation de gaz d'échappement (500) est configuré pour conduire le gaz d'échappement au travers de la conduite de recirculation de gaz d'échappement (60, 120) lorsque le fluide d'échange au niveau d'une entrée de fluide (211), l'air ambiant et/ou l'agent réfrigérant atteint ou dépasse une température minimale.

8. Moteur à combustion interne comprenant un agencement de recirculation de gaz d'échappement selon l'une quelconque des revendications 4 à 7 et/ou un échangeur de chaleur selon l'une quelconque des revendications 1 à 3.
